**Europäisches Patentamt**

**European Patent Office**

**Office européen des brevets**

(19)

(11) Veröffentlichungsnummer: **0 275 467 B1**

(12) # EUROPÄISCHE PATENTSCHRIFT

(45) Veröffentlichungstag der Patentschrift:
22.08.90

(51) Int. Cl.⁵: **G01M 3/22, E21B 47/10**

(21) Anmeldenummer: **87118358.8**

(22) Anmeldetag: **11.12.87**

(54) Gerät zum Prüfen der Gasdichtigkeit von Verbindungen zwischen Hohlkörpern.

(30) Priorität: **08.01.87 DE 3700384**

(43) Veröffentlichungstag der Anmeldung:
**27.07.88 Patentblatt 88/30**

(45) Bekanntmachung des Hinweises auf die Patenterteilung:
**22.08.90 Patentblatt 90/34**

(84) Benannte Vertragsstaaten:
**AT FR GB IT NL**

(56) Entgegenhaltungen:
**EP-A- 0 120 622**
**WO-A-84/02978**
**DE-A- 3 407 498**
**GB-A- 2 056 091**
**US-A- 4 646 559**

(73) Patentinhaber: **Weatherford Oil Tool GmbH, Hainhäuser Weg 150, D-3012 Langenhagen 1(DE)**

(72) Erfinder: **Jänsch Manfred, Moorkamp 25, 3008 Garbsen 5(DE)**

(74) Vertreter: **Arendt, Helmut, Dipl.-Ing., Hubertusstrasse 2, D-3000 Hannover 1(DE)**

## Beschreibung

Die Erfindung betrifft ein Gerät zum Prüfen der Gasdichtigkeit von Verbindungen zwischen Hohlkörpern unter Verwendung zweier ringförmiger elastischer Dichtungskörper, die mit Abstand zueinander angeordnet sind und deren Durchmesser unter axialer Druckbelastung vergrößerbar sind, wobei sich die Dichtungskörper zu beiden Seiten der zu überwachenden Prüfstelle befinden und zwischen sich eine Prüfkammer bilden.

Um Undichtigkeiten an Verbindungen zwischen Hohlkörpern, beispielsweise zwischen zwei Rohren zu beseitigen, ist es üblich, die Verbindungsstelle einer Leckprüfung zu unterwerfen. Dabei wird ein unter Druck stehendes Prüfmittel auf die Prüfstelle geleitet und der Druck überprüft. Ein Druckabfall zeigt eine Undichtigkeit an.

Nach einem weiteren Prüfverfahren ist es bekannt, ein Gas durch zwei miteinander verbundene Rohrstücke zu leiten. Dabei wird der Gasdruck mit Hilfe eines Absperrwerkzeugs von innen aufgebracht. Ein solches Verfahren und ein Werkzeug zur Durchführung des Verfahrens sind beispielsweise in der DE-OS 30 30 665 beschrieben. Sie zeigt zwei mit Abstand zueinander angeordnete ringförmige Dichtungen aus federnd nachgiebigem Material, die durch zwei Kolben, von denen jeder einer der Dichtungen zugeordnet ist, axial zusammenpreßbar sind. Dadurch wird erreicht, daß sich die Dichtungen an die inneren Rohrwandungen der miteinander verbundenen Rohrstücke legen und somit eine Prüfkammer bilden, in welche Prüfgas unter Druck, beispielsweise Helium, eingeleitet wird. An der Außenseite dieser Prüfkammer sind im Bereich der Prüfstellen Meßinstrumente angeschlossen, mit denen gegebenenfalls austretende Gasmengen angezeigt werden. Die bekannten Ausführungen haben den Nachteil, daß sie erhebliche Prüfmittelmengen für die Prüfverfahren benötigen. Das gasförmige Prüfmittel muß bei der Anwendung der bekannten Geräte in großen Mengen erzeugt und komprimiert werden. Große Gasmengen in Verbindung mit hohen Drücken schaffen jedoch erhebliche Gefahren, nicht nur im Bereich des Prüfgerätes selbst, sondern schon am Erzeugergerät und an der von diesem zum Prüfgerät führenden Zuleitung.

Der Erfindung liegt die Aufgabe zu Grunde, ein Gerät nach dem Gattungsbegriff des Patentanspruchs 1 so auszubilden, daß die Menge des benötigten gasförmigen Prüfmittels erheblich herabgesetzt werden kann, so daß die sich durch die Prüfdrücke ergebenden Gefahren ganz erheblich entschärft werden können. Zur Lösung dieser Aufgabe wird vorgeschlagen, die an der Prüfstelle gebildete Prüfkammer in zwei konzentrische Räume veränderbarer Größen zu unterteilen, wobei der äußere mit einem gasförmigen Prüfmittel und der innere mit einem inkompressiblen Druckmittel füllbar ist.

Weitere, den Erfindungsgegenstand vorteilhaft gestaltende Merkmale sind in den abhängigen Ansprüchen angegeben.

Durch die Verwendung sehr geringer gasförmiger Prüfmittelmengen ist die Sicherheit gegen Arbeitsunfälle ganz erheblich verbessert. Es besteht ferner die Möglichkeit, die Höhe des Prüfdrucks wesentlich, d. h. weit über 1000 bar zu steigern, da die große Druckerhöhung innerhalb des Prüfgerätes erzeugt werden kann und somit die Sicherheit auch im Bereich der separaten Energieerzeuger und deren Zuleitungen zum Prüfgerät erhöht wird. Dadurch, daß das Gerät mit wesentlich kleineren Energieerzeugern betrieben werden kann, ergibt sich eine weitere bzw. zusätzliche Verbesserung der Sicherheit, und es ist mit einem wirtschaftlichen Vorteil durch den geringen Verbrauch von Helium bzw. von Gemischen von Helium mit anderen Gasen verbunden.

Mit den Figuren der Zeichnung sind zwei Ausführungsbeispiele des Erfindungsgegenstandes schematisch dargestellt und nachstehend erläutert.

Es zeigen:

Fig. 1 die Anordnung eines Prüfgerätes an der Nahtstelle zweier Rohre im Längsschnitt,

Fig. 2 ein Prüfgerät gemäß Fig. 1, jedoch zusätzlich mit einem innerhalb des Gerätes angeordneten Druckverstärker,

Fig. 3 die Draufsicht auf einen Dichtkörper in erheblich vergrößerter Darstellung,

Fig. 4 einen Schnitt A-B durch den Dichtkörper gemäß Fig. 3,

Fig. 5 die schaubildliche Darstellung des Dichtungskörpers nach den Figuren 3 und 4,

Fig. 6 die Draufsicht auf einen Dichtungskörper mit im Querschnitt konischen Armierungselementen und

Fig. 7 den Schnitt C-D durch den Dichtungskörper gemäß Fig. 6,

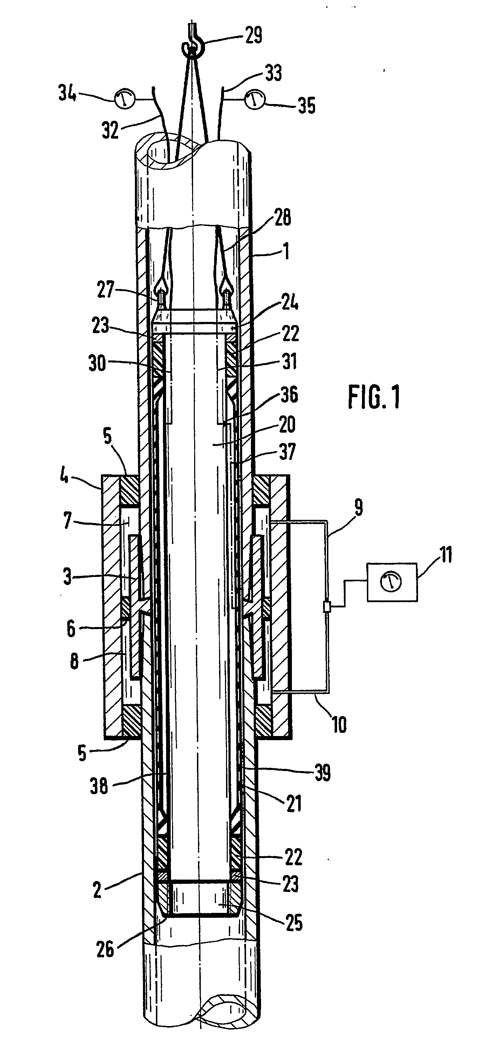

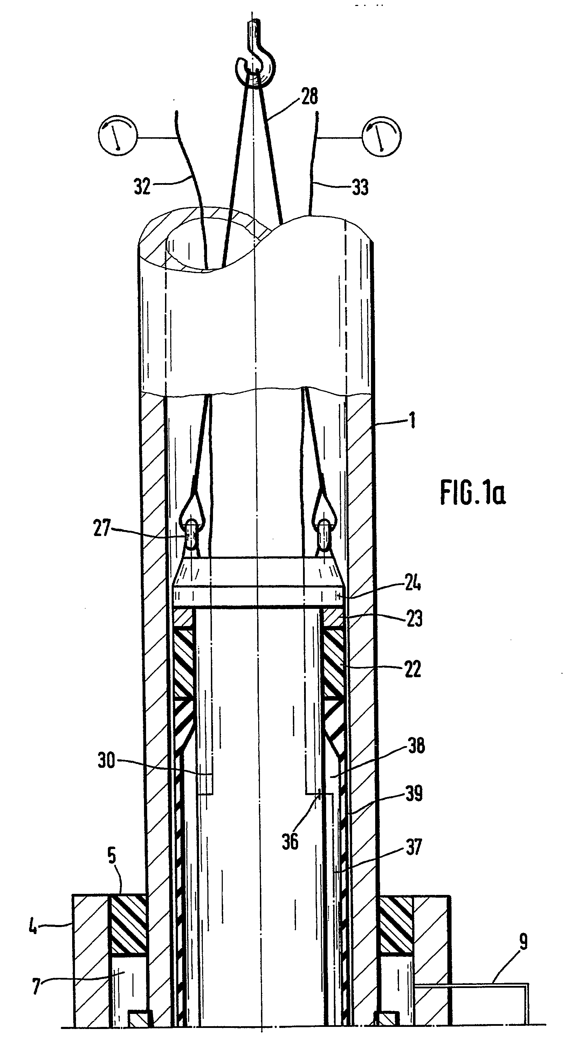

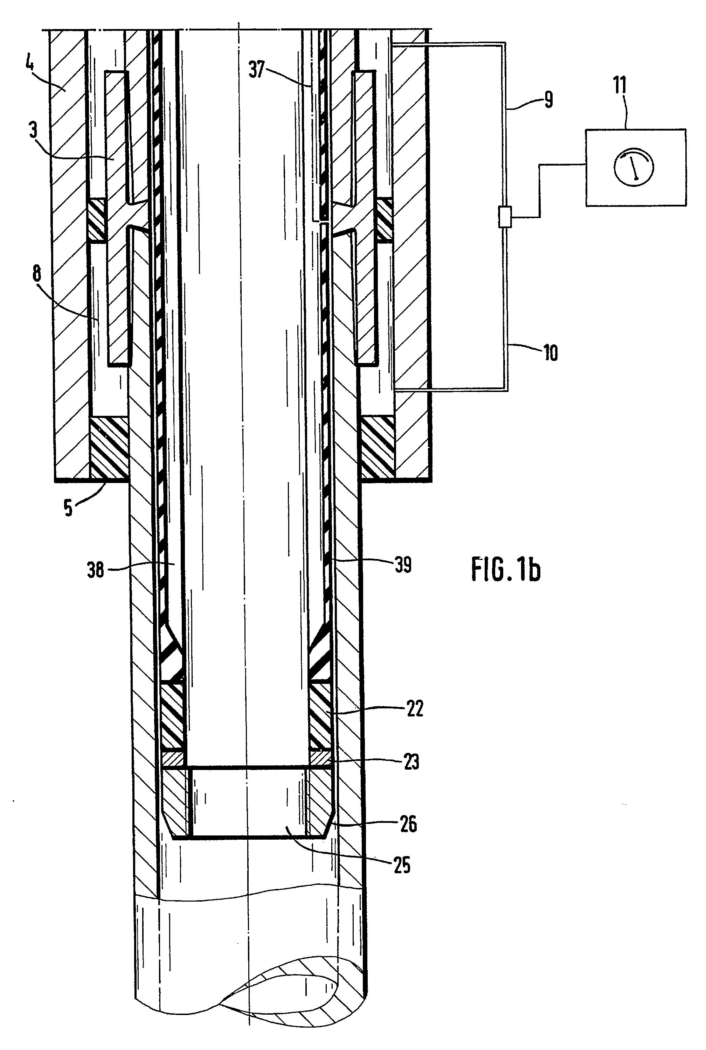

Fig. 1a u. 1b eine vergrößerte Darstellung des Prüfgerätes gemäß Fig. 1,

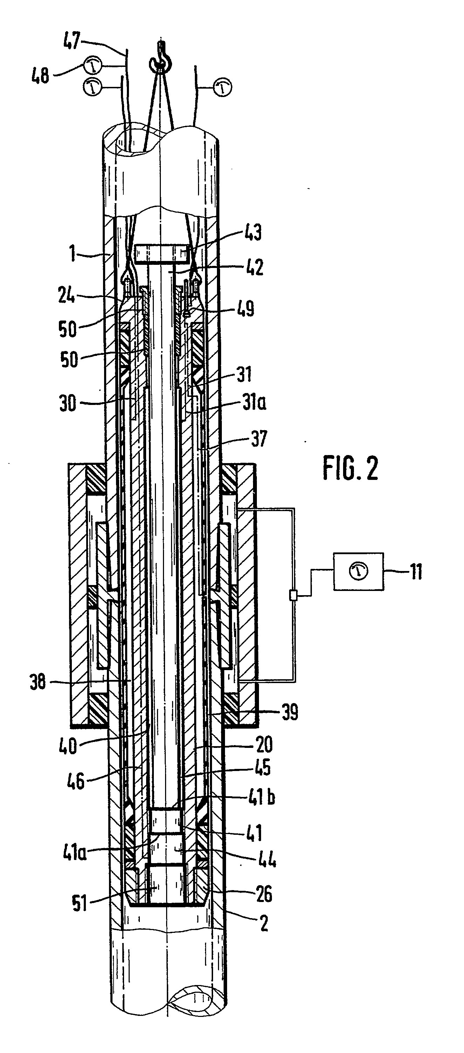

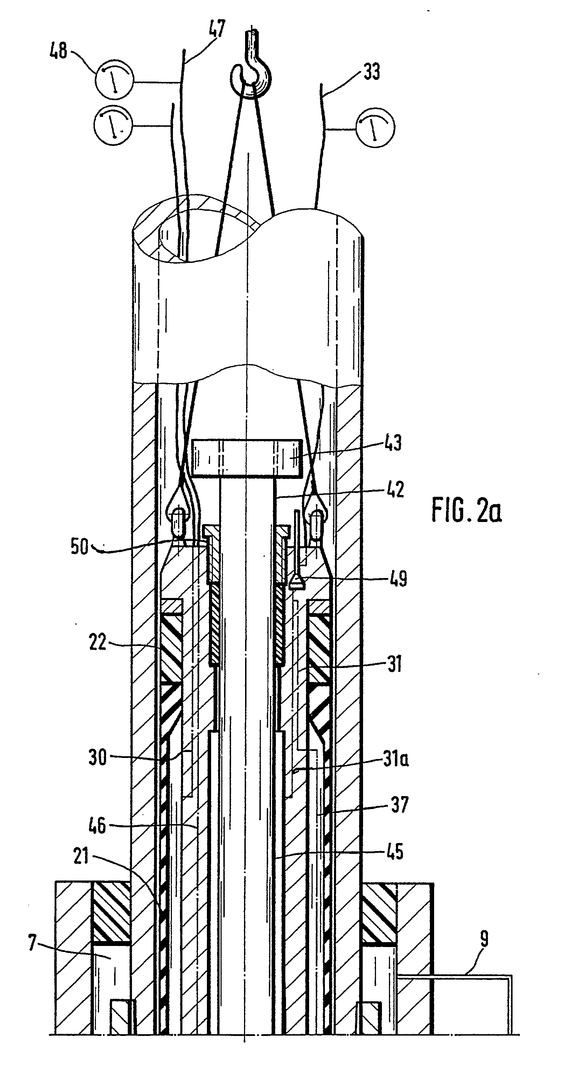

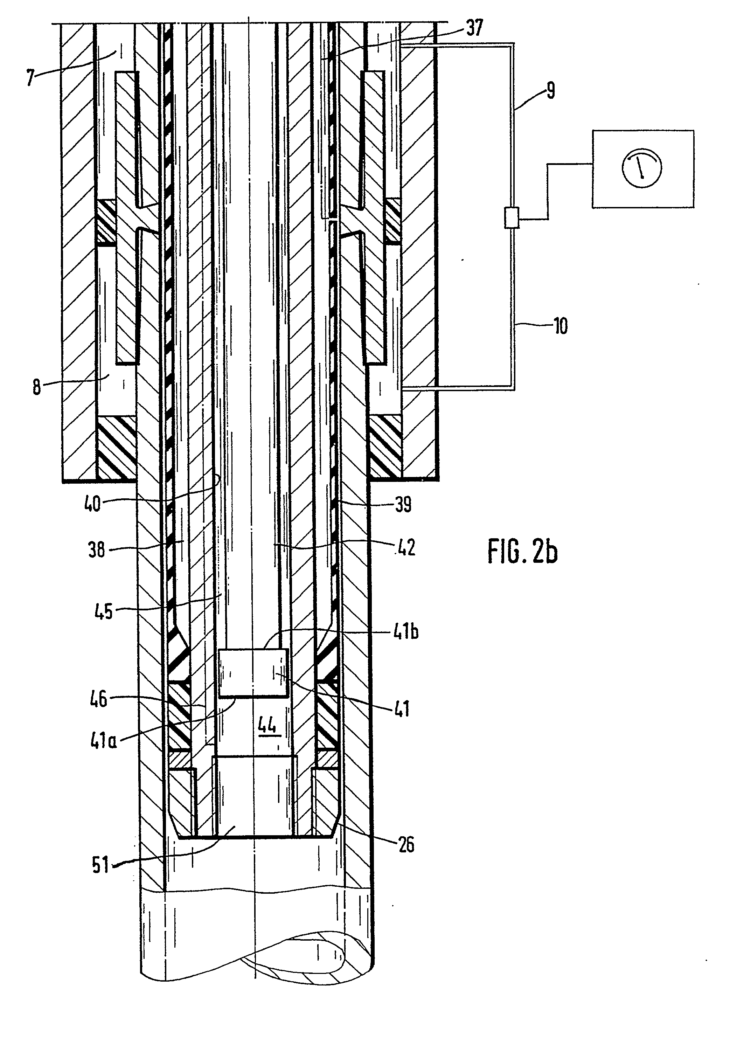

Fig. 2a u. 2b eine vergrößerte Darstellung des Prüfgerätes gemäß Fig. 2.

Bei dem gezeigten Ausführungsbeispiel greifen die Enden zweier Rohre 1 und 2 in eine gemeinsame Rohrmuffe 3, mit der sie verschraubt sind und dadurch eine gasdichte Rohrverbindung herstellen.

Um zu prüfen, ob durch die miteinander in Eingriff stehenden Gewindegänge von Muffe und Rohrenden geringfügige Gasmengen nach außen dringen können, ist die Verbindungsstelle von einem Prüfgehäuse 4 eingefaßt, das zu beiden Seiten mit Hilfe entsprechender Dichtelemente 5 nach außen abgedichtet ist. Durch eine dichtende Zwischenlage 6 ist der Gesamtraum in die beiden Prüfkammern 7 und 8 unterteilt. Über Leitungen 9 und 10 können gegebenenfalls durch die Schraubverbindung hindurchtretende Gasmengen einem Meßgerät 11 zugeführt werden.

Innerhalb der Rohre 1 und 2 ist ein erfindungsgemäß gestaltetes Prüfgerät angeordnet. Es besteht aus einem tragenden Geräteschaft 20 für eine Membran 21 aus einem elastomerem Material. Zu beiden Seiten ist die Membran von elastischen Dichtkörpern 22 begrenzt, deren Durchmesser durch axiale Kräfte vergrößerbar sind. Die Dichtkörper 22 können sich an Stützringen 23, beispielsweise aus Metall, abstützen. Am oberen Ende ist der Tragschaft 20 mit einem absatzartigen Bund 24 und am gegenüberliegenden Ende mit einem Gewindezapfen 25 zur Aufnahme einer Spannmutter 26 versehen.

Der absatzförmige Bund 24 weist zwei Tragösen 27 für Tragseile 28 auf, mit welchen das Gerät an dem Traghaken 29 eines nicht dargestellten Hebegerätes aufgehängt ist.

Der Tragschaft 20 ist mit Kanälen 30 und 31 versehen, in welche Zuleitungen 32 und 33 für ein inkompressibles Druckmittel bzw. ein gasförmiges Prüfmittel münden. Die Drücke beider Elemente können über Meßgeräte 34 und 35 kontrolliert werden. Der Kanal 31 für das gasförmige Prüfmittel ist mit einem Anschluß 36 für eine Leitung 37 versehen, die sich durch den Druckraum 38 des inkompressiblen Druckmittels bis etwa in die Mitte der Membran 21 erstreckt und in diesem Bereich durch die Membran hindurch geführt ist, so daß das gasförmige Prüfmittel unmittelbar im Bereich der Verbindungsstelle an die Außenseite der Membran geführt werden kann und den äußerst geringen Trennraum 39 zwischen der Außenseite der Membran 21 und den Innenwandungen der Rohre 1 und 2 auffüllt.

Nach dem Einführen des Prüfgerätes in den Innenraum der miteinander verbundenen Rohrenden wird zunächst über die Leitung 32 und den Kanal 30 ein inkompressibles Druckmittel, beispielsweise Wasser, Hydrauliköl oder dergleichen in die Druckkammer 38, das ist der Ringraum zwischen Membran 21 und Tragschaft 20, geleitet. Dadurch übt die Membran axiale Kräfte auf die Dichtkörper 22, in der Fachsprache als Packer bezeichnet, aus. Da die Verschiebbarkeit der Dichtkörper durch den Bund 24 des Tragschaftes bzw. die Spannmutter 26 unterbunden ist, reagieren die Dichtkörper mit einer Durchmesservergrößerung und bilden dadurch einen Prüfraum, der durch die sich in axialer Richtung erstreckende Membrane in zwei konzentrische Kammern 38, 39 unterteilt wird, die aus der Druckmittelkammer 38 und der eigentlichen Prüfkammer 39 bestehen. Nach dem Erreichen des gewünschten Flüssigkeitsdruckes wird gasförmiges Prüfmittel über die Leitung 33, den Kanal 31 und die anschließende Leitung 37 in die Prüfkammer 39 geführt, wobei der Gasdruck wenigstens geringfügig höher sein muß als der Druck des inkompressiblen Druckmittels, um zu gewährleisten, daß sich eine genügende Gasmenge im Ringraum um die Membran verteilt. Bei nicht genügender Dichtigkeit der Verbindungsstelle werden Gasspuren in die Kammern 7 bzw. 8 des Prüfgehäuses 4 treten.

Das erfindungsgemäße Prüfgerät ist nicht nur in hervorragender Weise für die Überprüfung von Schraubverbindungen, sondern in gleicher Weise auch von Schweißverbindungen geeignet. Nach Fig. 2 ist der Tragschaft 20 mit einer zentralen abgesetzten Bohrung 40 versehen, in der ein Kolben 41 mit Differenzdruckflächen 41a und 41b längs verschiebbar ist. Der Kolben 41 wird von einer Kolbenstange 42 getragen, die aus dem oberen Ende des Tragschaftes 20 herausreicht und an diesem Ende mit einem Bund 43 versehen ist. Durch den Kolben 41 wird die zylindrische Bohrung 40 in einen Arbeitsdruckraum 44 für ein inkompressibles Druckmittel und in einen Gasdruckraum 45 unterteilt, der die Kolbenstange 42 umgibt.

In den Arbeitsdruckraum 44 mündet ein Zuführkanal 46 für ein inkompressibles Druckmittel, das über eine separate Leitung 47 von außen dem Kanal 46 zugeführt wird. Über ein Druckmeßgerät 48 kann der Druck in dem Arbeitsdruckraum überwacht werden.

Der Gasdruckraum 45 erhält gasförmiges Prüfmittel über einen Zweigkanal 31a des Kanals 31. In den Kanal 31 ist ein Rückschlagventil 49 eingesetzt, das ein Rückströmen des Prüfmittels bei einer Druckerhöhung verhindert. Das obere Ende der Kolbenstange 42 ist durch eine übliche Stopfbuchseneinrichtung 50 abgedichtet, so daß aus dem Gasdruckraum 45 kein Gas nach außen treten kann.

Durch das Einleiten des gasförmigen Prüfmittels in die Prüfkammer 39 zwischen der Außenfläche der Membran 21 und den Innenwänden der Rohrenden 1 und 2 im Bereich der Prüfstelle wird gleichzeitig der Gasdruckraum 45, das ist der Ringraum zwischen der Kolbenstange 42 und der Zylinderbohrung 40 über die Leitung 31a mit gasförmigem Prüfmittel gefüllt. Sobald über die Leitung 47 und den Kanal 46 inkompressibles Druckmittel in den Arbeitsdruckraum 44 geführt ist und einen Grenzwert überschritten hat, wird der Kolben 41 bei dem gezeigten Beispiel nach oben verschoben. Dadurch wird der Druck des gasförmigen Prüfmittels im Druckraum 45 erhöht. Da die dem Druckraum 44 zugewandte Fläche 41a des Kolbens 41 größer ist als die Kolbenfläche 41b, erreicht das gasförmige Prüfmittel einen höheren Druck als das inkompressible Druckmittel im Arbeitsdruckraum 44. Somit ist es möglich, die Betriebssicherheit und gleichermaßen den Prüfmitteldruck ganz erheblich zu erhöhen. Nach außen ist der Arbeitsdruckraum 44 durch einen Gewindestopfen 51 hermetisch abgedichtet.

Zur Entfernung des Gerätes nach beendeter Prüfung wird zunächst der Druck im Arbeitsdruckraum 44 über den Zuführkanal 46 und die Leitung 47 gesenkt. Der Druck im Gasdruckraum 45 schiebt daraufhin die Kolbenstange 42 in Richtung des Gewindestopfens 51 bis der Bund 43 am freien Ende der Kolbenstange 42 das Rückschlagventil 49 öffnet und somit automatisch für eine Gasdruckentlastung sorgt. Anschließend kann das Gerät aus dem Rohr 1 herausgezogen werden.

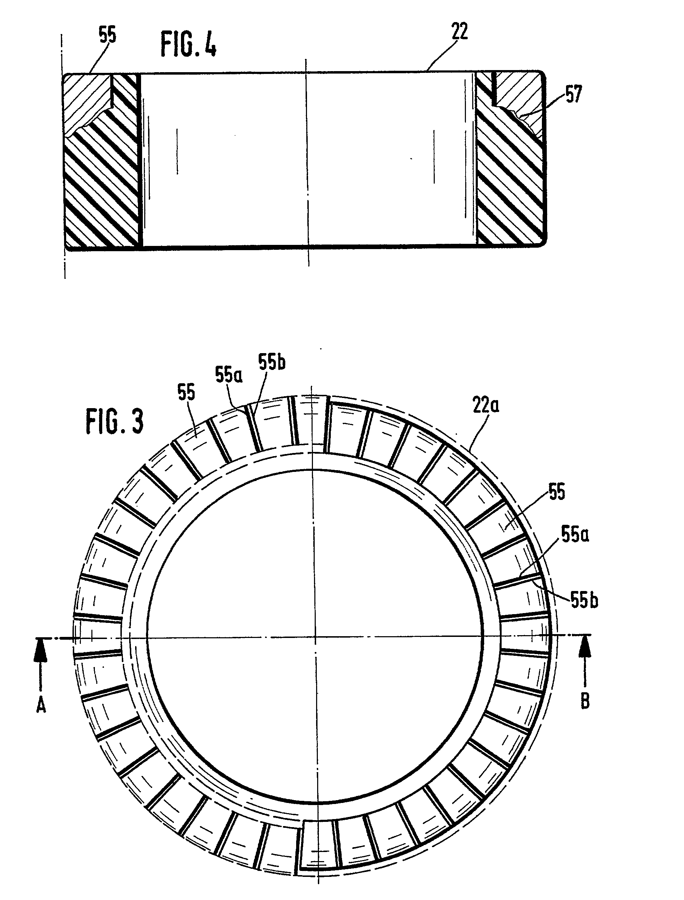

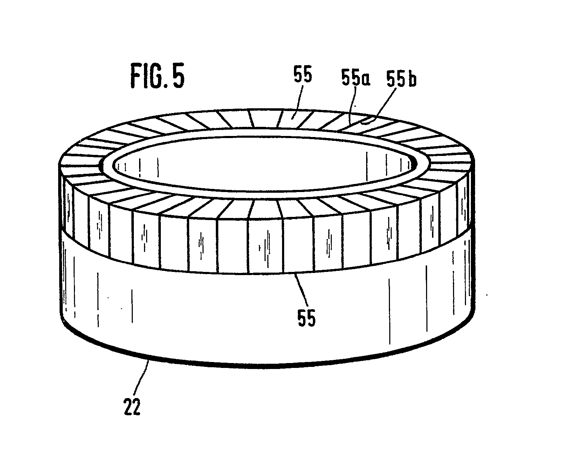

Die Dichtkörper 22 sind an ihren, dem Bund 24 bzw. der Spannschraube 26 zugewandten Enden, mit lamellenförmigen Armierungselementen 55 versehen (Figuren 3 und 5). Sie sind in das Material der Dichtkörper einvulkanisiert und liegen mit ihren radial gerichteten Trennflächen 55a, 55b im Ausgangszustand der Dichtungskörper unmittelbar aneinander. Bei einer Durchmesservergrößerung, wie sie durch die unterbrochene Strichführung 22a dargestellt ist, wandern die Armierungselemente radial nach außen und kommen dadurch an der Innenwandung der Rohre 1 und 2 zur Anlage. Gleichzeitig verhindern sie, daß Material der Dichtungskörper zwischen den Bund 24 bzw. die Spannschraube 26 und die davor gesetzten Stützringe 23 gequetscht wird, was bei wiederholter Benutzung des Prüfgerätes zur allmählichen Zerstörung der Dichtkörper führt.

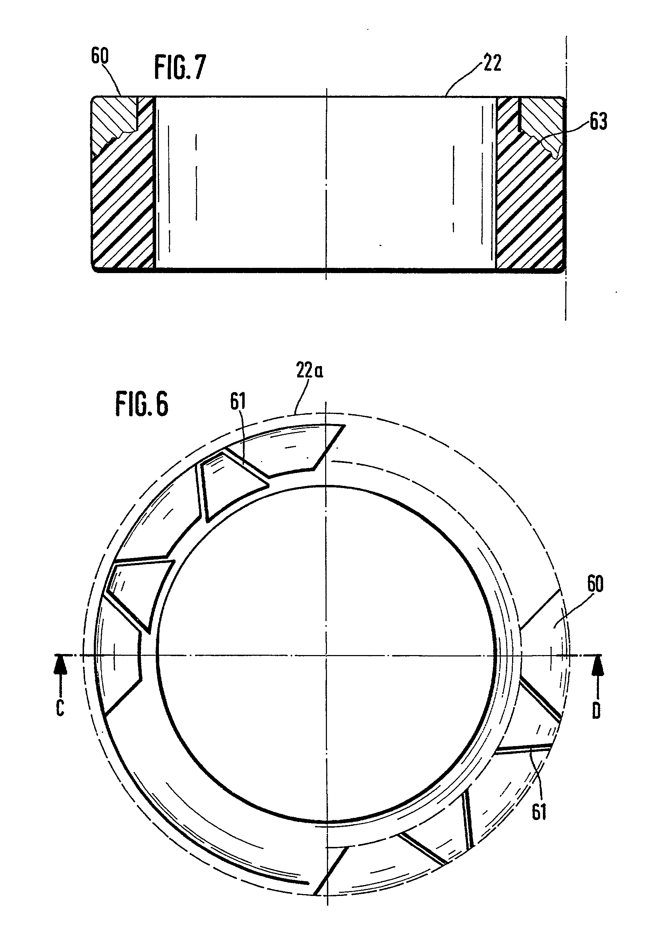

Bei einer weiteren Ausführungsform eines Dichtungskörpers gemäß Fig. 6 ist eine kegelstumpfähnliche Querschnittsform der Armierungselemente 60 vorgesehen. Sie sind so in das Material einvulkanisiert, daß beim Ausgangszustand deutliche Spalte 61 zwischen ihnen vorhanden sind, die sich bei einer Durchmesservergrößerung des Dichtungskörpers schließen und somit eine radiale Bewegung zur Bildung eines Armierungsringes gewährleisten.

Insbesondere bei dieser Ausführungsform ist es trotz des erheblichen axialen Druckes, der auf die Dichtungskörper einwirkt, nicht möglich, daß sich elastomeres Material zwichen den Trennflächen der Armierungselemente 60 in Axialrichtung hindurchquetschen läßt.

An ihren in das Material der Dichtungskörper hineinreichenden Enden zeigen die Armierungselemente unregelmäßige Kanten 57 bzw. 63 (Figuren 4 bzw. 7), um dadurch die bestmögliche Verbindung mit dem elastomerem Material der Dichtungskörper 22 zu erreichen.

## Patentansprüche

1. Gerät zum Prüfen der Gasdichtigkeit von Verbindungen zwischen Hohlkörpern unter Verwendung zweier ringförmiger elastischer Dichtungskörper (22), die mit Abstand zueinander angeordnet sind und deren Durchmesser unter axialer Druckbelastung vergrößerbar sind, wobei sich die Dichtungskörper (22) zu beiden Seiten der zu überwachenden Prüfstelle befinden und zwischen sich einen Prüfraum bilden, dadurch gekennzeichnet, daß der Prüfraum in zwei konzentrische Kammern (38, 39) veränderbarer Größen unterteilt ist, wobei die äußere (39) mit einem gasförmigen Prüfmittel und die innere (38) mit einem inkompressiblen Druckmittel füllbar ist.

2. Gerät nach Anspruch 1, dadurch gekennzeichnet, daß die beiden Kammern des Prüfraumes durch eine sich in deren Längsrichtung erstreckende membranartige Wand (21) voneinander getrennt sind.

3. Gerät nach den Ansprüchen 1 bis 2, dadurch gekennzeichnet, daß die Dichtungskörper (22) mit den Stützringen (23) und der Membran (21) auf einem tragenden Geräteschaft (20) angeordnet sind.

4. Gerät nach Anspruch 3, dadurch gekennzeichnet, daß der Geräteschaft (20) an einem Ende einen bundförmigen Anschlag (24) aufweist und am gegenüberliegenden Ende (25) mit einem Gewinde zum Aufschrauben einer Mutter (26) versehen ist.

5. Gerät nach einem der Ansprüche 3 oder 4, dadurch gekennzeichnet, daß der Geräteschaft mit Kanälen (30, 31) für die Zuführung des inkompressiblen Druckmittels und des gasförmigen Prüfmittels versehen ist, wobei das Prüfmittel übereine an dessen Zuführungskanal ansetzende Leitung (37) bis unmittelbar an die Prüfstelle führbar ist.

6. Gerät nach einem der Ansprüche 1 bis 5, dadurch gekennzeichnet, daß es mit einem Druckverstärker für das gasförmige Prüfmittel ausgerüstet ist.

7. Gerät nach Anspruch 6, dadurch gekennzeichnet, daß innerhalb des Geräteschaftes eine einen Arbeitsdruckraum (44) und einen Gasdruckraum (45) bildende zylindrische Bohrung (40) mit einem darin verschiebbaren Kolben (41) mit Differenzdruckflächen (41a, 41b) vorgesehen ist, dessen größere Druckfläche (41a) von einem inkompressiblen Druckmittel und dessen kleinere Druckfläche (41b) zur Komprimierung von dem gasförmigen Prüfmittel beaufschlagbar ist, welches über eine Leitung (31a) dem Gasdruckraum (45) der zylindrischen Bohrung (40) zuführbar ist.

8. Gerät nach Anspruch 7, dadurch gekennzeichnet, daß der Kolben (41) am Ende einer in die zylindrische Bohrung reichenden Stange (42) angeordnet ist, deren äußeres Ende mit einem Bund (43) zum Öffnen eines in dem Zuführkanal des gasförmigen Prüfmittels angeordneten Rückschlagventils (49) versehen ist.

9. Gerät nach einem oder mehreren der Ansprüche 1 bis 8, dadurch gekennzeichnet, daß die elastischen Dichtungskörper (22) ringförmig ausgebildet und an einer Stirnfläche mit lamellenförmigen Armierungselementen (55, 60) versehen sind.

10. Gerät nach Anspruch 9, dadurch gekennzeichnet, daß die Armierungselemente (55) radial gerichtete, im Ausgangszustand aneinanderliegende Flächen (55a 55b) aufweisen.

11. Gerät nach einem der Ansprüche 9 oder 10, dadurch gekennzeichnet, daß die Armierungselemente (60) einen im wesentlichen kegelstumpfförmigen Querschnitt aufweisen und derart angeordnet sind, daß sie im Ausgangszustand Spalte (61) zwischen benachbarten Elementen bilden, die bei einer Durchmesservergrößerung des Dichtungskörpers schließbar sind.

12. Gerät nach einem der Ansprüche 9 bis 11, dadurch gekennzeichnet, daß die Armierungselemente (55, 60) aus Stahl bestehen und in das elastomere Material des Dichtungskörpers einvulkanisiert sind.

## Claims

1. Apparatus for testing the gas-tightness of joints between hollow bodies, using two annular resilient seal elements (22) which are arranged at a mutual interval and the diameters of which are enlargeable under axial compressive load, whilst the seal elements (22) are located on both sides of the test station to be monitored and form a test space between themselves, wherein the test space is subdivided into two concentric chambers (38, 39) of variable sizes, the outer (39) of which can be filled with a gaseous test medium and the inner (38) with an incompressible pressurized medium.

2. Apparatus as claimed in claim 1, wherein the two chambers of the test space are mutually separated by a membranelike wall (21) extending in their longitudinal direction.

3. Apparatus as claimed in one of the claims 1 or 2, wherein the seal elements (22) with the bracing rings (23) and with the membrane (21) are arranged on a supporting apparatus shaft (20).

4. Apparatus as claimed in claim 3, wherein the apparatus shaft (20) exhibits a collar-shaped stop (24) at one end is provided with a screwthread for screwing on a nut (26) at the opposite end (25).

5. Apparatus as claimed in one of the claims 3 or 4, wherein the apparatus shaft is provided with channels (30, 31) for the supply of the incompressible pressurized medium and of the gaseous test medium, whilst the test medium can be passed through a pipe (37) starting at its supply channel directly to the test station.

6. Apparatus as claimed in any of claims 1 to 5, which is equipped with a pressure amplifier for the gaseous test medium.

7. Apparatus as claimed in claim 6, wherein a cylindrical bore (40) forming a work pressure space (44) and a gas pressure space (45) is provided within the apparatus shaft with a piston (41) slidable therein with differential pressure surfaces (41a, 41b), the greater pressure surface (41a) of which can be influenced by an incompressible pressurized medium and the smaller pressure surface (41b) for compression by the gaseous test medium which can be supplied through a pipe (31a) to the gas pressure space (45) of the cylindrical bore (40).

8. Apparatus as claimed in claim 7, wherein the piston (41) is arranged at the end of a rod (42) extending into the cylindrical bore, the outer end of which is provided with a collar (43) to open a nonreturn valve (49) arranged in the supply channel of the gaseous test medium.

9. Apparatus as claimed in one or more of claims 1 to 8, wherein the resilient seal elements (22) are of annular construction and provided with lamellar reinforcing elements (55, 60) at one end face.

10. Apparatus as claimed in claim 9, wherein the reinforcing elements (55) exhibit radially oriented surfaces (55a, 55b) in mutual contact in the initial state.

11. Apparatus as claimed in one of the claims 9 or 10, wherein the reinforcing elements (60) exhibit a substantially frustoconical cross-section and are arranged so that they form gaps (61) between adjacent elements in the initial state, which are closable in the case of an enlargement of diameter of the seal element.

12. Apparatus as claimed in one of the claims 9 to 11, wherein the reinforcing elements (55, 60) consist of steel and are vulcanized into the elastomeric material of the seal element.

## Revendications

1. Appareil pour examiner l'étanchéité aux gaz de raccords entre des corps creux en utilisant deux corps d'étanchéité élastiques annulaires (22) qui sont agencés à une certaine distance l'un de l'autre et dont les diamètres peuvent s'agrandir sous une charge de pression axiale, les corps d'étanchéité (22) se trouvant des deux côtés du lieu à examiner et formant entre eux un espace d'examen, caractérisé en ce que l'espace d'examen est divisé en deux chambres concentriques (38, 39) de grandeur variable, l'extérieure (39) pouvant être remplie d'un fluide gazeux de preuve et l'intérieure (38) d'un fluide incompressible sous pression.

2. Appareil selon la revendication 1, caractérisé en ce que les deux chambres de l'espace d'examen sont séparées l'une de l'autre par une paroi (21) en forme de membrane qui s'étend dans leur direction longitudinale.

3. Appareil selon les revendications 1 et 2, caractérisé en ce que les corps d'étanchéité (22) sont agencés avec les bagues d'appui (23) et la membrane (21) sur un arbre de support (20).

4. Appareil selon la revendication 3, caractérisé en ce que l'arbre d'appareil (20) présente, à une extrémité, une butée (24) en forme de bourrelet et, à l'extrémité opposée (25), un filetage pour y visser un écrou (26).

5. Appareil selon l'une des revendications 3 ou 4, caractérisé en ce que l'arbre d'appareil est pourvu de canaux (30, 31) pour l'amenée du fluide incompressible sous pression et du fluide gazeux de preuve, le fluide de preuve pouvant être mené, par une conduite (37) se raccordant à son canal d'alimentation, directement jusqu'au lieu d'examen.

6. Appareil selon l'une des revendications 1 à 5, caractérisé en ce qu'il est équipé d'un amplificateur de pression pour le fluide gazeux de preuve.

7. Appareil selon la revendication 6, caractérisé en ce qu'à l'intérieur de l'arbre est prévu un perçage cylindrique (40) formant un espace de pression de travail (44) et un espace de pression de gaz (45), avec un piston (41) qui y est mobile ayant différentes surfaces de pression (41a, 41b), dont la plus grande surface de pression (41a) peut être sollicitée par un fluide incompressible sous pression et dont la plus petite surface de pression (41b) peut être sollicitée par le fluide gazeux de preuve pour sa compression, qui, peut être amené par une conduite (31a) à l'espace de pression de gaz (45) du perçage cylindrique (40).

8. Appareil selon la revendication 7, caractérisé en ce que le piston (41) est agencé à l'extrémité d'une tige (42) pénétrant dans le perçage cylindrique, dont l'extrémité externe est pourvue d'un bourrelet (43) pour l'ouverture d'un clapet anti-retour (49) agencé dans le canal d'amenée du fluide gazeux de preuve.

9. Appareil selon l'une quelconque des revendications 1 à 8, caractérisé en ce que les corps élastiques d'étanchéité (22) sont de forme annulaire et sont pourvus à leurs surfaces frontales, d'éléments de renforcement (55, 60) en forme de lamelles.

10. Appareil selon la revendication 9, caractérisé en ce que les éléments de renforcement (55) présentent des surfaces dirigées radialement, qui sont adjacentes à l'état de repos (55a, 55b).

11. Appareil selon l'une quelconque des revendications 9 ou 10, caractérisé en ce que les éléments de renforcement (60) présentent une section transversale essentiellement en forme de tronc de cône et sont agencés de manière qu'à l'état de repos, ils forment des fentes (61) entre éléments voisins, qui peuvent être fermées lors d'une augmentation de diamètre du corps d'étanchéité.

12. Appareil selon l'une quelconque des revendications 9 à 11, caractérisé en ce que les éléments de renforcement (55, 60) sont en acier et sont vulcanisés dans le matériau élastomère du corps d'étanchéité.

FIG. 1

FIG.1a

FIG.1b

FIG. 2

48

47

33

43

42

FIG.2a

50

49

22

31

30

31a

46

37

21

45

7

9

FIG. 2b

FIG. 4

FIG. 3

EP 0 275 467 B1

FIG. 5

55  55a  55b

55

22

FIG.7

60

22

63

FIG.6

22a

61

60

61

C

D